# EUROPEAN PATENT APPLICATION

(11) **EP 2 455 738 A2**
(43) Date of publication of application: **23.05.2012**
(21) Application number: 11180057.9
(22) Date of filing: 05.09.2011
(51) Int. Cl.: G01M 3/02

(54) **Waterproofing test device and method**

(30) Priority: 19.11.2010 TW 99139998
(71) Applicant: Askey Computer Corp., New Taipei City 235 (TW)
(72) Inventor: Wu, Chun-Te, 241 TAIWAN (R.O.C.) (TW); Hsieh, Ching-Feng, 108 TAIWAN (R.O.C.) (TW)
(74) Representative: Ciceri, Fabio

(57) **Abstract**

A waterproofing test device tests waterproofing performance of a unit under test (UUT). The UUT has thereon a test recess and an aperture. The aperture is hermetically sealed with a gas-permeable waterproof element. The waterproofing test device includes a carrying jig, a water-supplying unit, and a pressure-applying unit. The carrying jig carries the UUT and has a hermetic sealing portion and a gas-discharging through-hole disposed within the hermetic sealing portion. The water-supplying unit is disposed in the carrying jig and provided with a water outlet corresponding in position to the aperture of the UUT. The pressure-applying unit provides internal negative pressure for the UUT by discharging gas therefrom and tests internal pressure of the UUT. Further provided is a waterproofing test method for use with the device. Given the device and method, a waterproofing performance test can be performed on a UUT with an aperture or fissure by gas discharging.

## Description

### FIELD OF THE INVENTION

The present invention relates to waterproofing test devices and methods, and more particularly, to a waterproofing test device and method for testing an electronic device having a gas-permeable waterproof element.

### BACKGROUND OF THE INVENTION

Moisture intrusion is one of the common causes of damage done to parts and components inside electronic products. With electronic products nowadays becoming more precise, electronic product consumers have increasingly high expectations of the waterproofing performance of electronic products. In this regard, it is imperative to meet the requirements of different waterproof grades of electronic products. For example, under the IPX7 standard, a unit under test (UUT) which is one meter deep under water is required to remain waterproof for 30 minutes. Hence, all electronic products have to undergo a waterproofing performance test during a R&D process or a manufacturing process.

A conventional waterproofing performance test conducted on electronic devices involves placing the UUT in the water directly, and then dismantling the UUT to inspect whether water has intruded into the UUT. As a result, even though it is possible that the UUT does not pass the conventional waterproofing performance test eventually, damage has already been done to the UUT due to water intrusion. More badly, the conventional waterproofing performance test is only used in a pilot survey conducted in an initial stage, such as the R&D state, or is carried out to products in the course of mass production thereof by means of random sampling; hence, it is impossible to ensure that each and every one of the products will manifest the same degree of waterproofing performance as that of the randomly checked samples.

To be precise and reliable, a waterproofing performance test for an electronic component of a high unit price has to be conducted by gas simulation whereby water pressure exerted upon an object under water is measured. Instead of immersing the object in the water, a waterproof performance testing worker applies a positive pressure to the UUT from outside the UUT or a negative pressure to the UUT from inside the UUT, so as to cut the costs incurred by damaged UUTs during the manufacturing process thereof. Taiwan Invention Patent I302601, entitled Waterproof Performance Testing System and Method, discloses discharging air from a UUT by means of a gas-discharging module, measuring the internal pressure of the UUT by means of a pressure converter, and evaluating the waterproofing characteristics of the UUT according to the measured variation of pressure with time. However, there are plenty of electronic devices which are not completely hermetically sealed, such as mobile phones and multimedia players. Formed on the casings of the electronic devices of this type are specific apertures or slits (for use with the microphone, speaker, or noise filter of a mobile phone, for example). Normally, a gas-permeable waterproof element is disposed in the apertures or slits and configured to admit gas. While the gas-permeable waterproof element serves a waterproof purpose, it is hardly an element suitable for the hermetic sealing of the casing of the electronic products. As a result, a pressure-based test of waterproof performance cannot be conducted on the electronic devices with the apertures/slits filled with the gas-permeable waterproof element.

In view of the drawbacks of the prior art, it is imperative to provide a waterproofing test device and a waterproofing test method for testing the waterproof performance of electronic devices equipped with a gas-permeable waterproof element.

### SUMMARY OF THE INVENTION

It is an objective of the present invention to provide a waterproofing test device and method for testing the waterproofing performance of a unit under test (UUT) having a gas-permeable waterproof element, such as an electronic device.

In order to achieve the above and other objectives, the present invention provides a waterproofing test device for testing the waterproofing performance of a unit under test (UUT), the UUT having thereon a test recess and an aperture, the aperture receiving a gas-permeable waterproof element, the waterproofing test device comprising: a carrying jig carrying the UUT and having a hermetic sealing portion and a gas-discharging through-hole, the gas-discharging through-hole having an end exposed from the carrying jig and enclosed by the hermetic sealing portion, the hermetic sealing portion, wherein hermetic sealing portion can be aligned with the test recess for hermetically sealing the space formed between the test recess, the gas-discharging through-hole, and the hermetic sealing portion while the carrying jig is carrying the UUT; a water-supplying units disposed in the carrying jig and equipped with a water outlet corresponding in position to the aperture of the UUT, and configured to supply water to the gas-permeable waterproof elements through the water outlet; and a pressure-applying unit connected to the gas-discharging through-hole of the carrying jig and configured to discharge gas from the UUT carried by the carrying jig in conjunction with the gas-discharging through-hole and the test recess, so as to produce a negative pressure inside the UUT and measure internal pressure of the UUT.

The water-supplying unit further comprises a flow controlling element connected to the water outlet for controlling water passing through the water outlet. The flow controlling element is conducive to enhancement of ease of use of the waterproofing performance test. Furthermore, operation of the water-supplying unit and the flow controlling element can be optimized by computerized control to enhance test performance and integrated into a production line, and can effectuate automation of the waterproofing performance test.

The carrying jig of the waterproofing test device can comprise a carrying base and a fastener. The carrying base carries the UUT. The fastener fixes in position the UUT in conjunction with the carrying base.

The hermetic sealing portion of the waterproofing test device is a hermetic sealing pad for coming into seamless contact with the UUT as soon as the UUT is fixed to the carrying base by means of the fastener. The hermetic sealing pad is replaceable.

The pressure-applying unit of the waterproofing test device comprises a controller and a pump connected to the controller, the pump being further connected to the gas-discharging through-hole of the carrying jig and configured to discharge gas from the UUT through the gas-discharging through-hole under the controller's control. In addition, different levels of pressure and periods of time can be set for conducting the waterproofing performance test, so as to meet the requirements for different waterproof grades.

The present invention further provides a waterproofing test method for testing waterproofing performance of a unit under test (UUT) with the waterproofing test device of the present invention, the UUT having thereon a test recess and an aperture, the aperture receiving a gas-permeable waterproof element, the waterproofing test method comprising the steps of: covering the gas-permeable waterproof elements received in the aperture on the UUT with water; setting a preset pressure and a first preset period of time of a gas-discharging procedure; performing the gas-discharging procedure on the UUT according to the first preset period of time and the preset pressure to thereby produce a negative pressure inside the UUT; and comparing the negative pressure inside the UUT with the preset pressure to evaluate waterproofing performance of the UUT when the gas-discharging procedure has been going on for the first preset period of time.

The waterproofing test method further comprises the steps of: stopping the gas-discharging procedure to thereby seal off the UUT upon determination that the gas-discharging procedure has been going on for the first preset period of time and a level of the negative pressure inside the UUT has reached a level of the preset pressure; and comparing the level of the negative pressure inside the UUT with the level of the preset pressure so as to evaluate the waterproofing performance of the UUT as long as the second preset period of time has not expired.

Hence, a waterproofing test device and method of the present invention have the following advantages: with the waterproofing test device and method of the present invention, an electronic device equipped with a gas-permeable waterproof element can undergo a waterproofing performance test without being immersed in water, thereby cutting R&D costs and production costs; the waterproofing test device and method of the present invention render the waterproofing performance test process efficient, because the waterproofing performance test performed with the waterproofing test device and method of the present invention entails drawing a conclusion on the waterproofing performance test by measuring the actual internal pressure of the UUT rather than disassembling the UUT to examine the extent of water intrusion, not to mention that it is feasible to perform the waterproofing performance test on every single piece of products with the waterproofing test device and method of the present invention during the manufacturing process of the products; and the present invention solves a problem facing the prior art, that is, the waterproofing performance of an electronic device cannot be tested by discharging gas therefrom, if a gas-permeable waterproof element is received in an aperture or a slit formed on the casing of the electronic device.

### BRIEF DESCRIPTION OF THE DRAWINGS

A detailed description of further features and advantages of the present invention is given below so that a person skilled in the art can understand and implement the technical contents of the present invention and readily comprehend the objectives, features, and advantages thereof by reviewing the disclosure of the present specification and the appended claims in conjunction with the accompanying drawings, in which:
FIG. 1 is a schematic view of a waterproofing test device according to a first embodiment of the present invention;
FIG. 2 is a schematic view of the waterproofing test device when assembled according to the first embodiment of the present invention;
FIG. 3 is a schematic view of a waterproofing test device according to a second embodiment of the present invention;
FIG. 4 is a schematic view of a waterproofing test device according to a third embodiment of the present invention;
FIG. 5 is a flow chart of a waterproofing test method according to a fourth embodiment of the present invention; and
FIG. 6 is a flow chart of a waterproofing test method according to a fifth embodiment of the present invention.

### DETAILED DESCRIPTION OF THE PREFERRED EMBODIMENTS

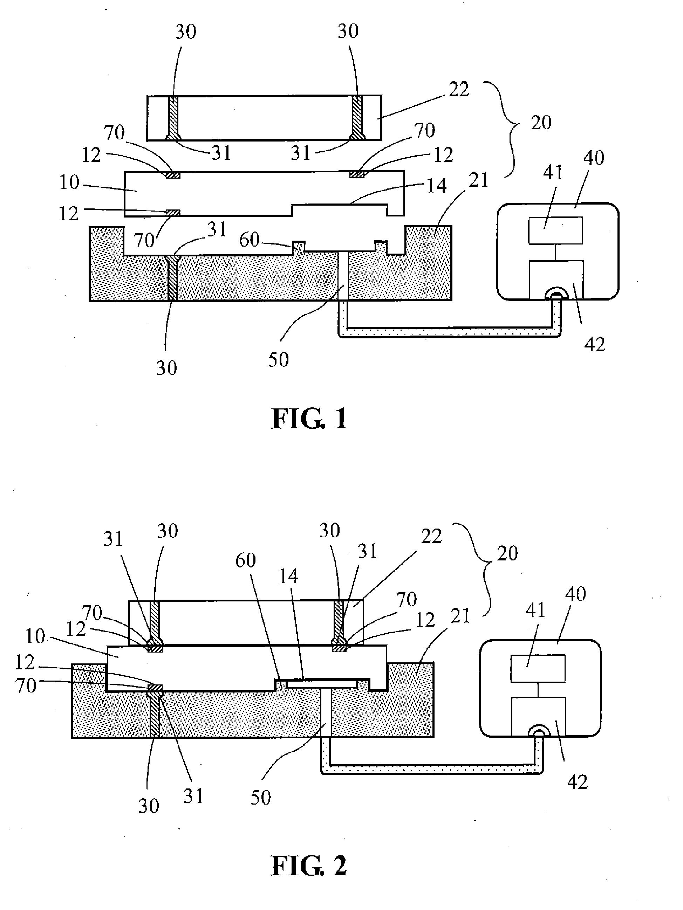

Referring to FIG. 1 and FIG. 2, there are shown schematic views of a waterproofing test device 1 according to a first embodiment of the present invention. As shown in the drawings, a unit under test (UUT) 10 of the present invention, such as a portable electronic device, is, but is not limited to, a mobile phone, a multimedia player, or a digital camera. In this embodiment, the UUT 10 is exemplified by a mobile phone whose casing , and a plurality of apertures 12 are disposed at specific positions of the casing of the mobile phone, such as the positions where the microphone and the speaker are located, to meet the functional requirements thereof. As shown in the drawings, the casing of the UUT 10 has three apertures 12 and a test recess 14, and the apertures 12 each receive a gas-permeable waterproof element 70. The gas-permeable waterproof elements 70 admit gas and thereby meet the functional requirements of the components near the apertures 12 (such as a microphone and a speaker).

Referring to FIG. 1 and FIG. 2, the waterproofing test device 1 according to the first embodiment of the present invention tests the waterproofing performance of the UUT 10, and comprises a carrying jig 20, a water-supplying unit 30, and a pressure-applying unit 40. The carrying jig 20 is used for carrying the UUT 10. The carrying jig 20 has a hermetic sealing portion 60 and a gas-discharging through-hole 50. An end of the gas-discharging through-hole 50 is exposed from the carrying jig 20 and enclosed by the hermetic sealing portion 60. The hermetic sealing portion 60 can be aligned with the test recess 14 for hermetically sealing the space formed between the test recess 14, the gas-discharging through-hole 50, and the hermetic sealing portion 60 while the carrying jig 20 is carrying the UUT 10. A plurality of water-supplying units 30 are disposed in the carrying jig 20 and each equipped with a water outlet 31 corresponding in position to a corresponding one of the apertures 12 of the UUT 10. The water-supplying units 30 supply water to the gas-permeable waterproof elements 70 through the water outlets 31, respectively. The pressure-applying unit 40 is connected to the gas-discharging through-hole 50 of the carrying jig 20. The pressure-applying unit 40 discharges gas from the UUT 10 in conjunction with the gas-discharging through-hole 50 and the test recess 14, so as to produce a negative pressure inside the UUT 10 and measure the internal pressure of the UUT 10. In practice, the water-supplying units 30 are equipped with the water outlets 31 corresponding in position to the apertures 12, respectively, and the water-supplying units 30 are configured to supply water to the gas-permeable waterproof elements 70 received in the apertures 12, respectively.

In another embodiment of the present invention, the carrying jig 20 further comprises a carrying base 21 and a fastener 22. The carrying base 21 carries the UUT 10. The UUT 10 is fixed in position by the fastener 22 and the carrying base 21, when the fastener 22 presses on the UUT 10. The carrying base 21 comprises the gas-discharging through-hole 50. The gas-discharging through-hole 50 is connected to the pressure-applying unit 40. The carrying base 21 comprises the hermetic sealing portion 60. Once the fastener 22 presses on the UUT 10, not only is the space formed between the test recess 14 of the UUT 10, the gas-discharging through-hole 50, and the hermetic sealing portion 60 hermetically sealed, but the back side of the UUT 10 abuts against the carrying base 21 in a seamless manner, thereby preventing ambient air from invading into the UUT 10. Furthermore, the connection of the UUT 10 and the pressure-applying unit 40 is not restricted by the aforesaid disclosure; instead, the pressure-applying unit 40 can be connected to the UUT 10 by a gas pipe, so as to discharge gas from the UUT 10 and produce the negative pressure therein.

The water-supplying units 30 supply water to the gas-permeable waterproof elements 70 received in the apertures 12, respectively. Due to their waterproofing characteristics, the gas-permeable waterproof elements 70 prevent water from invading into the UUT 10 and thus render the UUT 10 hermetically sealed.

Afterward, the pressure-applying unit 40 starts performing a gas-discharging procedure on the UUT 10 to produce a negative pressure therein, and then measures the internal pressure of the UUT 10.

The pressure-applying unit 40 of the waterproofing test device 1 of the present invention can provide a gas-discharging procedure whereby different preset pressures and a first preset period of time are preset to meet waterproofing needs or conform with characteristics of the UUT 10. The first preset period of time is the time taken to discharge gas from a waterproofing standard UUT and achieve the preset pressures. To meet the requirements of waterproof grades, it is feasible to further set a second preset period of time. The second preset period of time is the time interval between the cessation of the gas-discharging procedure and the commencement of the pressure measurement operation. For example, in a waterproof performance test supposed to be conducted at the preset pressure P, the first preset period of time T1, and the second preset period of time T2, after gas has been discharged from the waterproofing standard UUT for the first preset period of time T1, the internal pressure of the waterproofing standard UUT can reach the preset pressure P, and the level of the preset pressure P can be maintained during the second preset period of time T2. Hence, the gas-discharging procedure is performed on the UUT 10 according to the first preset period of time T1 and the preset pressure P, so as to produce a negative pressure P' inside the UUT 10. Once a preliminary result of the waterproofing performance test indicates that the gas-discharging procedure has been going on for the first preset period of time T1, the waterproofing performance test will proceed to the step of comparing the level of the negative pressure P' inside the UUT 10 with the preset pressure P to evaluate the waterproofing performance of the UUT 10. If the result of the comparison step reveals that the negative pressure P' of the UUT 10 has not reached the preset pressure P by the end of the first preset period of time T1, the result of the comparison step leads to a preliminary conclusion that the UUT 10 is not completely hermetically sealed and thus the UUT 10 fails the waterproofing performance test. Conversely, if the result of the comparison step reveals that the negative pressure P' of the UUT 10 has reached the level of the preset pressure P by the end of the first preset period of time T1, the result of the comparison step leads to a preliminary conclusion that the UUT 10 is hermetically sealed and thus the UUT 10 passes the waterproofing performance test. If a preliminary result of the waterproofing performance test indicates that the gas-discharging procedure has been going on for the first preset period of time T1 and the level of the negative pressure P' inside the UUT 10 has reached the level of the preset pressure P, the pressure-applying unit 40 will stop the gas-discharging procedure and thereby seal off the UUT 10. At this point of time, the waterproof performance test proceeds to the step of comparing the level of the negative pressure P' inside the UUT 10 with the level of the preset pressure P so as to evaluate the waterproofing performance of the UUT 10 during the second preset period of time T2. If a preliminary result of the comparison step indicates that that the level of the negative pressure P' inside the UUT 10 continues to equal the level of the preset pressure P throughout the second preset period of time T2, the result of the comparison step leads to a preliminary conclusion that the UUT 10 passes the waterproofing performance test. If a preliminary result of the comparison step indicates that the level of the negative pressure P' inside the UUT 10 no longer equals the level of the preset pressure P during or at the end of the second preset period of time T2, the result of the comparison step leads to a preliminary conclusion that air has invaded into the UUT 10 and thus the UUT 10 fails the waterproofing performance test.

In addition, the pressure-applying unit 40 comprises a controller 41 and a pump 42 connected to the controller 41. The pump 42 is connected to the gas-discharging through-hole 50 of the carrying jig 20. Under the control of the controller 41, the pump 42 discharges air from the UUT 10 through the gas-discharging through-hole 50. The controller 41 is a programmable controller with a human-machine interface or a host computer, and is configured to provide users with a preset pressure and a preset period of time. Also, the controller 41 can start or stop the gas-discharging procedure carried out by the pump 42, and can measure the internal pressure of the UUT 10.

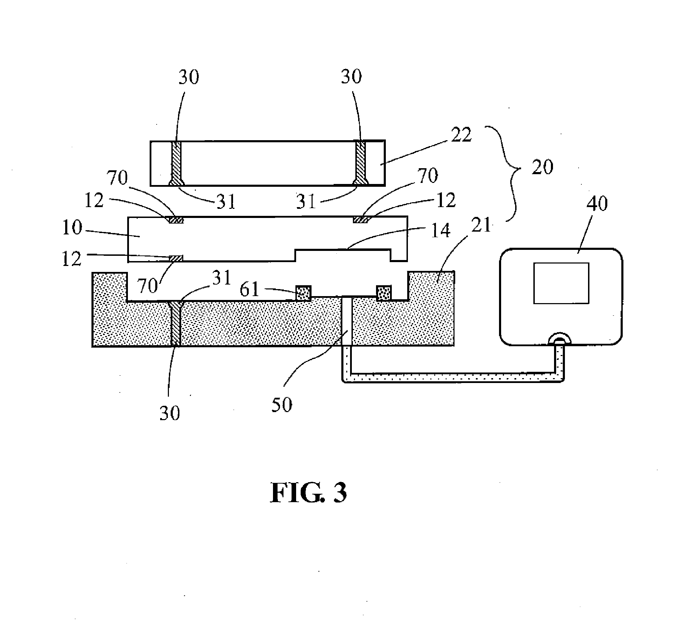

Referring to FIG. 3, there is shown a schematic view of a waterproofing test device 2 according to a second embodiment of the present invention. As shown in the drawing, the hermetic sealing portion 60 of the carrying base 21 is a hermetic sealing pad 61 for coming into seamless contact with the UUT 10 as soon as the UUT 10 is fixed to the carrying base 21 by means of the fastener 22. The hermetic sealing pad 61 enhances the hermetic sealing of the space between the gas-discharging through-hole 50 and the UUT 10 and thus protects the UUT 10 against ambient air intrusion which might otherwise compromise the test result. A frequent change of the UUT 10 and persistent compression and friction during the test are the likely causes of abrasion or deformation of the hermetic sealing portion 60 after long use, thereby reducing hermetic sealing. Another advantage of the hermetic sealing pad 61 is its replaceability. Once the hermetic sealing pad 61 is damaged, only damaged said hermetic sealing pad 61 must be replaced, but not the carrying base 21, thereby extending the service life of the waterproofing test device 2.

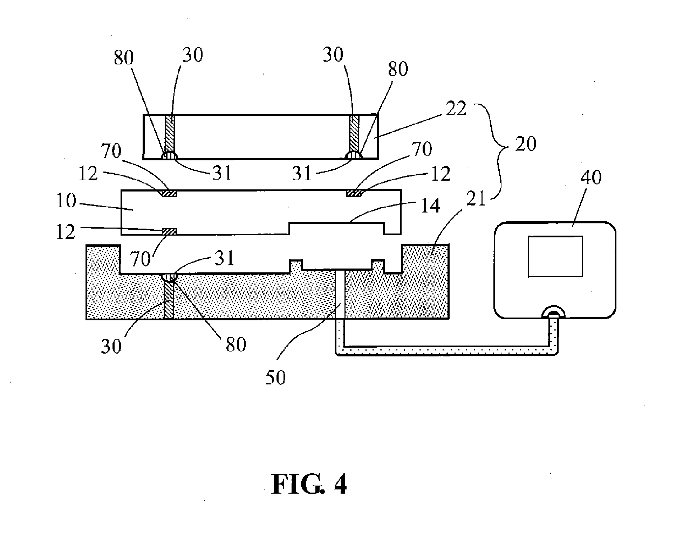

Referring to FIG. 4, there is shown a schematic view of a waterproofing test device 3 according to a third embodiment of the present invention. As shown in the drawing, the water-supplying units 30 of the waterproofing test device 3 further comprises a plurality of flow controlling elements 80 connected with the water outlets 31, respectively, for controlling the flow of water passing through the water outlets 31; hence, the flow controlling elements 80 are conducive to enhancement of ease of use of the waterproofing performance test. Furthermore, operation of the water-supplying units 30 and the flow controlling elements 80 can be optimized by computerized control to enhance test performance and integrated into a production line, and can effectuate automation of the waterproofing performance test. In practice, the positions of the flow controlling elements 80 are not limited by the disclosure in the present invention; instead, the flow controlling elements 80 can be positioned at positions other than those disclosed in the present invention, such as any positions along a pipeline between the water-supplying units 30 and the water outlets 31, or any positions along a pipeline between a water tank that supplies water to the waterproofing test device 3 of the present invention and the water outlets 31.

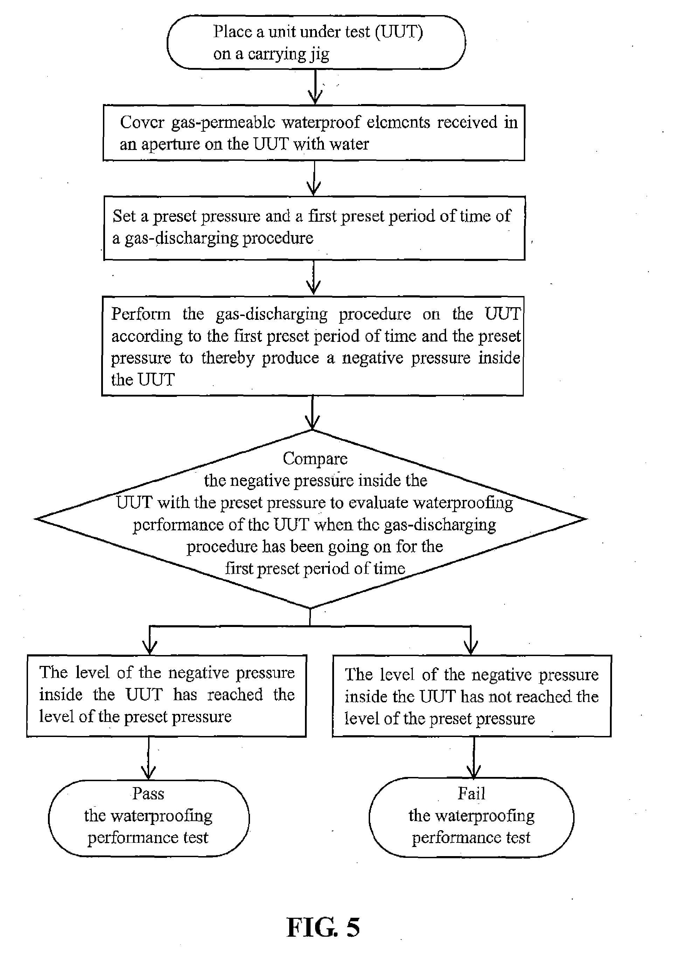

Another objective of the present invention is to provide a waterproofing test method for use with the waterproofing test devices of the present invention for testing the waterproofing performance of the UUT 10 equipped with a gas-permeable waterproof element. Referring to FIG. 5, there is shown a flow chart of a waterproofing test method according to a fourth embodiment of the present invention. The waterproofing test method according to the fourth embodiment is exemplified by the waterproofing test device 1 shown in FIG. 1 and FIG. 2, and is configured to test the waterproofing performance of a UUT. The commencement of the first step of the waterproofing test method according to the fourth embodiment of the present invention is preceded by a conventional step of placing a UUT on a carrying jig. Referring to FIG. 5, the waterproofing test method according to the fourth embodiment of the present invention comprises the steps of: covering the gas-permeable waterproof elements 70 received in the apertures 12 on the UUT 10 with water; setting a preset pressure and a first preset period of time of a gas-discharging procedure; performing the gas-discharging procedure on the UUT 10 according to the first preset period of time and the preset pressure to thereby produce a negative pressure inside the UUT 10; and comparing the negative pressure inside the UUT 10 with the preset pressure to evaluate the waterproofing performance of the UUT 10 when the gas-discharging procedure has been going on for the first preset period of time T1. If the level of the negative pressure inside the UUT 10 does not reach the level of the preset pressure, it indicates that the UUT 10 is not completely hermetically sealed and thus does not pass the waterproofing performance test. Conversely, if the level of the negative pressure inside the UUT 10 reaches the level of the preset pressure, it indicates that the UUT 10 is hermetically sealed and thus passes the waterproofing performance test. A point to note is that although the gas-permeable waterproof elements 70 of the UUT 10 are covered with water, water cannot invade into the UUT 10 due to the waterproofing characteristics of the gas-permeable waterproof elements 70, and thus the UUT 10 remains hermetically sealed.

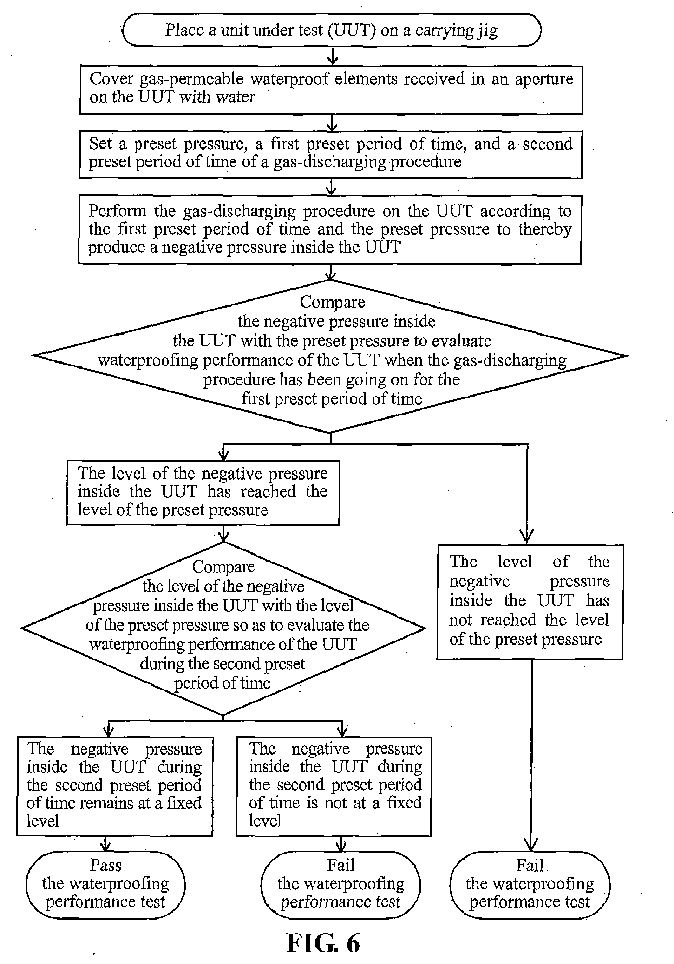

Referring to FIG. 6, there is shown a flow chart of a waterproofing test method according to a fifth embodiment of the present invention. In addition to the steps of the waterproofing test method according to the fourth embodiment, the waterproofing test method according to the fifth embodiment further comprises the steps of: stopping the gas-discharging procedure to thereby seal off the UUT 10 upon determination that the gas-discharging procedure has been going on for the first preset period of time and a level of the negative pressure inside the UUT 10 has reached a level of the preset pressure; and comparing the level of the negative pressure inside the UUT 10 with the level of the preset pressure so as to evaluate the waterproofing performance of the UUT 10 during the second preset period of time. If the negative pressure inside the UUT 10 during the second preset period of time is not at a fixed level, it indicates that ambient air enters the UUT 10 as a result of a functional failure of the gas-permeable waterproof elements 70, thereby leading to a conclusion that the UUT 10 fails the waterproofing performance test. If the negative pressure inside the UUT 10 during the second preset period of time remains at a fixed level, it can be determined that the UUT 10 passes the waterproofing performance test and meets the requirements of the waterproof grade.

The foregoing embodiments are provided to illustrate and disclose the technical features of the present invention so as to enable persons skilled in the art to understand the disclosure of the present invention and implement the present invention accordingly, and are not intended to be restrictive of the scope of the present invention. Hence, all equivalent modifications and replacements made to the foregoing embodiments without departing from the spirit and principles in the disclosure of the present invention should fall within the scope of the present invention as set forth in the appended claims. Accordingly, the protection for the present invention should be defined by the appended claims.

## Claims

1. A waterproofing test device for testing waterproofing performance of a unit under test (UUT), the UUT having thereon a test recess and an aperture, the aperture receiving a gas-permeable waterproof element, the waterproofing test device comprising:
a carrying jig for carrying the UUT and having a hermetic sealing portion and a gas-discharging through-hole, the gas-discharging through-hole having an end exposed from the carrying jig and enclosed by the hermetic sealing portion, the hermetic sealing portion, wherein hermetic sealing portion can be aligned with the test recess for hermetically sealing the space formed between the test recess, the gas-discharging through-hole, and the hermetic sealing portion while the carrying jig is carrying the UUT;
a water-supplying unit disposed in the carrying jig, equipped with a water outlet corresponding in position to the aperture of the UUT, and configured to supply water to the gas-permeable waterproof elements through the water outlets; and
a pressure-applying unit connected to the gas-discharging through-hole of the carrying jig and configured to discharge gas from the UUT carried by the carrying jig in conjunction with the gas-discharging through-hole and the test recess, so as to produce a negative pressure inside the UUT and measure internal pressure of the UUT.

2. The waterproofing test device of claim 1, wherein the water-supplying unit further comprises a flow controlling element connected to the water outlet, for controlling water passing through the water outlet.

3. The waterproofing test device of claim 1, wherein the carrying jig comprises a carrying base for carrying the UUT and a fastener for fixing in position the UUT in conjunction with the carrying base.

4. The waterproofing test device of claim 3, wherein the hermetic sealing portion is a hermetic sealing pad for coming into seamless contact with the UUT as soon as the UUT is fixed to the carrying base by means of the fastener.

5. The waterproofing test device of claim 1, wherein the pressure-applying unit comprises a controller and a pump connected to the controller, the pump being further connected to the gas-discharging through-hole of the carrying jig and configured to discharge gas from the UUT through the gas-discharging through-hole under the controller's control.

6. A waterproofing test method for testing waterproofing performance of a unit under test (UUT), the UUT having thereon a test recess and an aperture, the aperture receiving a gas-permeable waterproof element, the waterproofing test method comprising the steps of:
covering the gas-permeable waterproof elements received in the aperture on the UUT with water;
setting a preset pressure and a first preset period of time of a gas-discharging procedure;
performing the gas-discharging procedure on the UUT according to the first preset period of time and the preset pressure to thereby produce a negative pressure inside the UUT; and
comparing the negative pressure inside the UUT with the preset pressure to evaluate waterproofing performance of the UUT when the gas-discharging procedure has been going on for the first preset period of time.

7. The waterproofing test method of claim 6, further comprising the steps of:
stopping the gas-discharging procedure to thereby seal off the UUT upon determination that the gas-discharging procedure has been going on for the first preset period of time and a level of the negative pressure inside the UUT has reached a level of the preset pressure; and
comparing the level of the negative pressure inside the UUT with the level of the preset pressure so as to evaluate the waterproofing performance of the UUT during a second preset period.
